# EUROPÄISCHE PATENTSCHRIFT

(11) **EP 2 266 681 B1**
(45) Veröffentlichungstag und Bekanntmachung des Hinweises auf die Patenterteilung: **13.12.2017**
(21) Anmeldenummer: 10180942.4
(22) Anmeldetag: 24.10.2003
(51) Int. Cl.: B01D 53/94, F01N 3/022, F01N 3/023, F01N 3/20

(54) **Abgasanlage mit Reduktionsmittelzufuhr und Filterelement mit SCR-Katalysator**
Exhaust gas system having a reducing agent supply unit and a filter element with a SCR-catalyst
Installation de gaz d'échappement dotée d'une amenée de moyen de réduction et d'un élément de filtre avec un catalyseur SCR

(30) Priorität: 22.11.2002 DE 10254764
(43) Veröffentlichungstag der Anmeldung: 29.12.2010
(62) Teilanmeldung aus: 03799461.3
(73) Patentinhaber: Continental Automotive GmbH, 30165 Hannover (DE)
(72) Erfinder: Brück, Rolf, 51429, Bergisch Gladbach (DE); Hodgson, Jan, 53840, Troisdorf (DE)

(56) Entgegenhaltungen:
- WO-A-01/80978
- WO-A-01/92692
- US-A1- 2002 056 273

## Beschreibung

Der Gegenstand der vorliegenden Erfindung betrifft eine Abgasanlage zur Umsetzung von Schadstoffen eines Abgases einer mobilen Verbrennungskraftmaschine. Diese Abgasanlage umfasst zumindest eine Abgasleitung mit wenigstens einer Reduktionsmittelzufuhr, wenigstens einem katalytischen Konverter sowie mindestens einem Filterelement. Solche Abgasanlagen werden bevorzugt zur Reinigung von Abgasen aus Dieselmotoren im Kfz-Bereich eingesetzt.

Bei der Verbrennung von Kohlenwasserstoffen in einer Verbrennungskraftmaschine (z.B. Diesel- und Ottomotor) entstehen neben den Hauptverbrennungsprodukten Kohlendioxid und Wasserdampf auch Nebenprodukte, die teilweise unerwünscht sind. Hierbei handelt es sich insbesondere um Rußpartikel und um Stickoxide. Der Anteil der Stickoxide ist neben der Prozessführung der Verbrennung (Temperaturen, Taktzeiten, etc.) auch von dem Luft-/Kraftstoffverhältnis der verbrannten Gemischs abhängig. Bei Luftunterschuss enthält das Abgas relativ viel Kohlendioxid und Kohlenwasserstoffe, während bei Luftüberschuss das Kohlendioxid und die Kohlenwasserstoffe fast vollständig oxidiert werden. Der Gehalt an Stickoxiden in einem Abgas durchläuft ein Maximum im Bereich leicht magerer Gemischzusammensetzungen. In diesem Bereich liegt aber auch für Verbrennungsmotoren, insbesondere für Ottomotoren, ein Optimum des spezifischen Verbrauches. Werden also insbesondere Ottomotoren auf optimal niedrigen Verbrauch eingestellt, können auch hohe NOₓ-Konzentrationen im Abgas vorhanden sein.

Zur Verringerung des NOₓ-Gehaltes im Abgas einer Verbrennungskraftmaschine ist beispielsweise durch die EP 0 487 886 A1 das Verfahren der selektiven katalytischen NOₓ-Reduktion (SCR: "Selective catalytic reaction") in sauerstoffhaltigen Abgasen unter Anwendung von Harnstoff und einem Reduktionskatalysator bekannt. Der Harnstoff wird vor Kontakt mit dem Reduktionskatalysator, bei dem es sich um einen katalytischen Konverter handelt, quantitativ zu Ammoniak und Kohlendioxid hydrolisiert. Die Verwendung von Harnstoff hat den Vorteil, dass die Mitführung von Ammoniak in Kraftfahrzeugen sowie die Bereitstellung von Ammoniak an Tankstellen mit entsprechenden, erforderlichen Sicherheitsvorkehrungen vermieden wird. Problematisch bei der Verwendung von Harnstoff als Reduktionsmittel ist, dass bei einer unmittelbaren Einspritzung von Harnstoff vor den katalytischen Konverter unerwünschte Reaktionsprodukte entstehen können.

Zur Vermeidung dieses Problems schlägt die DE 42 03 807 A1 eine Vorrichtung zur katalytischen Reduktion von Stickoxiden vor. Die Vorrichtung weist einen katalytischen Konverter sowie eine Zuführeinrichtung auf, die flüssigen Harnstoff fein auf einen vor dem katalytischen Konverter angeordneten Verdampfer sprüht.

Der Verdampfer ist in Form eines Strömungsmischers ausgebildet, wodurch der Wirkungsgrad der Harnstoff-Zersetzung erhöht werden soll. Der als Strömungsmischer ausgebildete Verdampfer, der nachfolgend als "Mischer" bezeichnet wird, soll nach der DE 42 03 807 A1 vorzugsweise so ausgebildet sein, dass innerhalb des Mischers Verwirbelungen sowie radiale und/oder tangentiale Strömungskomponenten hervorgerufen werden, so dass die Wärmeübertragung vom Abgas auf die Harnstofflösung möglichst rasch und vollkommen vollzogen wird. Ferner soll eine möglichst gleichmäßige Verteilung der Harnstofflösung sowie der daraus entstehenden Gase über den gesamten Querschnitt des Mischers und eines hinter dem Mischer angeordneten Hydrolysekatalysators bewirkt werden.

Neben der Umsetzung von Stickoxiden steht, insbesondere bei Dieselmotoren, auch die Reduktion von Partikel-Emissionen im Vordergrund. Zu diesem Zweck sind eine Vielzahl unterschiedlicher Konzepte betreffend Partikelfallen bekannt, die kontinuierlich (CRT) oder diskontinuierlich regeneriert werden. Zusätzlich zur chemischen Wechselwirkungen mit Additiven und speziellen Beschichtungen, stellt die sichere Regeneration des Filterelements im Abgassystem immer noch ein Problem dar. Die Regeneration der Partikelfalle ist erforderlich, da die zunehmende Ansammlung von Partikelteilchen in zu durchströmenden Kanalwänden einen sich erhöhenden Staudruck des Abgases vor der Partikelfalle bewirkt, der eine negative Auswirkung auf die Motorleistung hat. Die Regeneration umfasst z.B. das intermittierende, kurzzeitige Aufheizen der Partikelfalle bzw. der darin gesammelten Partikeln, so dass die Rußpartikel in gasförmige Bestandteile umgesetzt werden. Diese hohe thermische Beanspruchung der Partikelfalle hat allerdings negative Auswirkungen auf deren Lebensdauer. Zur Vermeidung dieser diskontinuierlichen und thermisch sehr verschleißfördernden Regeneration wurde ein System zur kontinuierlichen Regeneration (CRT) entwickelt. In einem solchen System werden die Partikel bei Temperaturen bereits oberhalb von 200° C mittels Oxidation mit NO₂ verbrannt. Das hierzu erforderliche NO₂ wird z.B. durch einen Oxidationskatalysator erzeugt, der stromaufwärts von der Partikelfalle angeordnet ist. Hierbei stellt sich jedoch grade im Hinblick auf die Anwendung bei Kraftfahrzeugen mit Diesel-Kraftstoff das Problem, dass wegen des üblicherweise vorliegenden Lustüberschusses nur ein unzureichender Anteil von Stickstoffmonoxid (NO) im Abgas existiert, welcher zu dem gewünschten Stickstoffdioxid (NO₂) umgewandelt werden kann. Infolgedessen kann bislang nicht sichergestellt werden, dass eine kontinuierliche Regeneration der Partikelfalle im Abgassystem stattfindet.

Weiterhin sind aus der WO 01/92692 A und WO 01/80978 A diverse Systeme zur Abgasbehandlung bekannt, die insbesondere auch eine Umsetzung von Partikeln und Sickoxiden betreffen. Dort wird auch vorgeschlagen, entlang eines Abgasstranges eines Kraftfahrzeugs eine Additivzugabe, eine Partikelfalle und einen Reduktionskatalysator vorzusehen. Dabei kann die Partikelfalle nach Art eines lagenweise aufgebauten Wabenkörpers ausgeführt, wobei sie Strukturen hat, um in einer Fluidströmung, die durch die Partikelfalle strömt, Verwirbelungs-, Beruhigungs-und/oder Totzonen zu erzeugen. Somit wird eine genügende Wahrscheinlichkeit zur Reaktion mit im Abgas vorhandenem Stickstoffdioxid bis zur weitgehenden Beseitigung der aufgefangenen Partikel erreicht (CRT-Effekt). Auch kann die Partikelfalle teilweise offen sein und mit weiteren diversen Katalysatoren kombiniert werden.

Das Additiv, beispielsweise Cer, wird insbesondere dazu eingesetzt, die Partikelfalle zu regenerieren. Die WO 01/80978 A schlägt darüber hinaus noch vor, die Partikelfalle zur Vermischung des Additivs mit dem Abgas einzusetzen, wenn als Additiv Ammoniak/Harnstoff eingesetzt werden sollte, so dass dieses Gemisch nachfolgend einem Reduktionskatalysator zugeführt werden kann.

Die Vielzahl und Komplexität der diskutierten verschiedenen Systemen zur Abgasnachbehandlung lassen bereits erkennen, dass diese noch nicht ausreichend hinsichtlich effizienter Synergien untersucht wurden.

Hiervon ausgehend ist es Aufgabe der vorliegenden Erfindung, eine Abgasanlage zur Umsetzung von Schadstoffen eines Abgases einer mobilen Verbrennungskraftmaschine anzugeben, welche einfach aufgebaut ist, und eine effektive Reduktion der Stickoxid- und Partikel-Emissionen bewirkt.

Diese Aufgabe wird gelöst durch eine Abgasanlage mit den Merkmalen des Patentanspruchs 1. Weitere vorteilhafte Ausgestaltungen der Abgasanlage sind in den abhängigen Patentansprüchen beschrieben. Diese Weiterbildungen können einzeln oder in Kombination miteinander in die Abgasanlage integriert werden, um eine verbesserte Schadstoff-Reduktion zu erreichen.

Die erfindungsgemäße Abgasanlage zeichnet sich dadurch aus, dass die Reduktionsmittelzufuhr vor dem Filterelement in die Abgasleitung mündet und der katalytische Konverter dem Filterelement in Strömungsrichtung des Abgases nachgeschaltet ist. Dabei weist der katalytische Konverter bevorzugt eine die selektive katalytische Reaktion fördernde katalytisch aktive Beschichtung (SCR-Katalysator: z.B. Vanadiumpentoxid) auf. Das Filterelement ist ein metallischer Wabenkörper mit zumindest teilweise strukturierten Blechlagen, die für das Abgas durchströmbare Kanäle bilden, wobei die Blechlagen zumindest teilweise Mikrostrukturen aufweisen. Mit Hilfe der Mikrostrukturen wird also versucht, im Inneren des Wabenkörpers bzw. über die axiale Länge der Kanäle zu verhindern, dass sich eine laminare Strömung ausbildet. Unter Mikrostrukturen sind beispielsweise Erhebungen, Öffnungen, Flügelchen, Strömungsleitflächen, Noppen, Abrisskanten oder dergleichen zu verstehen.

Während die Mehrzahl der bekannten Abgasanlagen sehr viele unterschiedliche Komponenten zur Umsetzung der Schadstoffe im Abgas einsetzen, werden durch diesen einfachen Aufbau, welcher nur drei Komponenten im Inneren einer Abgasanlage umfasst, erstaunliche Ergebnisse hinsichtlich der Schadstoffumsetzungen erreicht. Dies konnte in einer Vielzahl technisch aufwendiger Untersuchungen gezeigt werden. Die überraschende Effektivität dieser Abgasanlage ist darin begründet, sich vor dem Filterelement (insbesondere mit einseitig verschlossenen Kanälen) bereits ein solcher Staudruck bildet, der eine solch turbulente Strömung verursacht, dass das zugegebene Reduktionsmittel sich ausgezeichnet verteilt. In Vergleichsversuchen hat sich gezeigt, dass andere Komponenten zur Umsetzung der Schadstoffe (z.B. Katalysatoren, Adsorber, etc.) einen geringeren Staudruck verursachen, so dass hier nicht vergleichbar gute Ergebnisse festgestellt wurden. Lediglich der Einsatz eines zusätzlichen Mischers konnte eine ähnlich gute Verteilung des Reduktionsmittels im Abgas erzielen, allerdings hat der nur eine einzige Funktion, nämlich die Verteilung des Reduktionsmittels. Im Gegensatz dazu erfüllt das Filterelement darüber hinaus noch die Aufgabe, im Abgas enthaltenen Schwebeteilchen (wie z.B. Ruß, Sulfate, usw.) aufzufangen bzw. umzusetzen.

Grundsätzlich stellt bei der Verwendung von Filterelementen die Regeneration ein beachtliches Problem dar. Deshalb wird weiter vorgeschlagen, stromaufwärts der Reduktionsmittelzufuhr ein Heizelement anzuordnen. Das Heizelement hat die Aufgabe, das Abgas kontinuierlich oder diskontinuierlich auf eine Temperatur zu bringen, die eine Regeneration des stromabwärts gelegenen Filterelements sicherstellt. Die hierfür erforderliche Temperatur hängt wesentlich von den eingesetzten katalytischen Beschichtungen und/oder den umzusetzenden Partikeln ab. Als Heizelement eignen sich insbesondere metallische Wabenkörper, welche mit einer Spannungsquelle versehen sind. Diese können kurzzeitig und auch unter hochdynamischen Belastungen eine signifikante Temperaturerhöhung des Abgases bewirken.

Eine solche Abgasanlage kann für die Reduktionsmittelzufuhr eine Fördereinrichtung zur Einbringung von Fest-Harnstoff in die Abgasleitung aufweisen. Das bedeutet, dass hier nicht flüssiger und/oder gasförmiger Harnstoff mittels einer Düse oder einem Ventil eingebracht wird, sondern Partikel aus festem Harnstoff in den Abgasstrom stromaufwärts, also vor, der Filterelement zugegeben werden. Die Harnstoff-Partikel haben bevorzugt eine Größe von 0,1 mm bis 1,3 mm und werden in relativer Nähe (beispielsweise nicht in einem Abstand größer 30 cm, insbesondere 10 cm) vor dem Filterelement mit dem Abgasstrom in Kontakt gebracht. Der sich vor dem Filterelement aufbauende Staudruck bzw. die dort vorliegende turbulente Strömung hat wiederum eine Verteilung der Harnstoff-Partikel zur Folge. Nun tritt aber zusätzlich noch der Effekt auf, dass die Harnstoff-Partikel in Teilbereichen des Filterelements haften bzw. eingelagert werden. Das hat zur Folge, dass sich die Harnstoff-Partikel und herauszufilternden Partikel (gerade, wenn sie ungefähr eine gleiche Partikelgröße haben) in den gleichen Hohlräumen bzw. an gleichen Oberflächen des Filterelements anlagern und somit besonders günstige Voraussetzungen zur Umsetzung beispielsweise von Rußteilchen geschaffen sind. Ganz besonders vorteilhaft ist dabei die Beschichtung des Filterelements mit einer katalytisch wirkenden SCR-Beschichtung.

Gemäß einer weiteren Ausgestaltung ist stromaufwärts der Reduktionsmittelzufuhr ein die Oxidation des Abgases fördernder Katalysatorträger angeordnet, dem bevorzugt ein Heizelement nachgeschaltet ist, das vorzugsweise mit dem Katalysatorträger eine Baueinheit bildet.

Besonders vorteilhaft ist es, dass das Filterelement metallisch ist. Dabei weist das Filterelement bevorzugt Strukturen in den Strömungskanälen auf, welche Verwirbelungs-, Beruhigungs- und/oder Totzonen erzeugen. Diese Strukturen sind so zu gestalten, dass das Filterelement dennoch offen ist. Ein Filterelement wird dann als "offen" bezeichnet, wenn es grundsätzlich von Partikeln vollständig durchlaufen werden kann, und zwar auch von Partikeln, die erheblich größer als die eigentlich herauszufilternden Partikel sind. Dadurch kann ein solches Filterelement selbst bei einer Agglomeration von Partikeln während des Betriebes nicht verstopfen. Ein geeignetes Verfahren zur Messung der "Offenheit" eines Filterelementes ist beispielsweise die Prüfung, bis zu welchem Durchmesser kugelförmige Partikel noch durch einen solchen Filter rieseln können. Bei vorliegenden Anwendungsfällen ist ein Filterelement insbesondere dann "offen", wenn Kugeln von größer oder gleich 0,1 mm Durchmesser noch hindurchrieseln können, vorzugsweise Kugeln mit einem Durchmesser oberhalb von 0,2 mm. Das hat den Vorteil, dass das Filterelement nicht verstopft wie ein herkömmliches Filtersystem (mit abwechselnd einseitig verschlossenen Kanälen), einfach herzustellen und leicht zu regenerieren ist. Solche "offenen" Filterelemente gehen beispielsweise aus den Dokumenten DE 201 17 873 U1, DE 201 17 659 U1, WO 02/00326, WO 01/92692, WO 01/80978 hervor, deren Offenbarungsinhalt hiermit vollständig zum Gegenstand der vorliegenden Beschreibung gemacht ist.

Bei einer weiteren Ausführungsform umfasst das Filterelement wiederum eine Mehrzahl zumindest teilweise strukturierter Blechlagen, die für das Abgas durchströmbare Kanäle 13 bilden. Das Abgas weist eine Vielzahl von Partikeln auf, die im wesentlichen parallel zur Strömungsrichtung des Abgases einer Flugbahn folgen. Durch die Mikrostrukturen bzw. Leitflächen erfolgt eine Umlenkung der Partikel hin zu einer Zwischenlage. Diese Zwischenlage kann auch als blanke metallische Blechlage ausgebildet sein, ist jedoch bevorzugt eine Zwischenlage aus Fasern. Diese Zwischenlage weist bevorzugt eine z.B. die selektive katalytische Reaktion fördernde Beschichtung auf. Hat die Zwischenlage eine niedrige Porosität (ca. 50%), so sind die Leitflächen bevorzugt klein auszuführen, damit einerseits ausreichend Ruß bzw. Partikel aus dem Abgasstrom herausgefiltert werden, andererseits aber auch eine relativ unbehinderte Durchströmung des Reduktionsmittel-Abgas-Gemisches durch das Filterelement gewährleistet ist. Auf der anderen Seite ist es aber auch möglich, die Filterlage bzw. die mit Fasern versehene Zwischenlage relativ durchlässig zu gestalten, also mit einer sehr hohen Porosität zu versehen, insbesondere im Bereich von 75 bis 90 %. Das hat zur Folge, dass die feindispersverteilten Reduktionsmittelteilchen durch eine solche Filterlage hindurchtreten können bzw. sich dort gut anlagern können und somit entweder in der beschichteten Zwischenlage selbst oder noch an/in einem stromabwärts gelegenen SCR-Katalysator ihre Wirkung entfalten können.

Unter Umständen kann es jedoch dennoch erforderlich sein, eine zusätzliche Feinverteilung des Reduktionsmittels bei bestimmten Anwendungsgebieten sicherzustellen. Zu diesem Zeck wird vorgeschlagen, dass in Strömungsrichtung des Abgases stromaufwärts und/oder stromabwärts des Filterelements mindestens ein Mischer angeordnet ist, wobei der Mischer bevorzugt stromabwärts der Reduktionsmittelzufuhr positioniert ist. Ist der Mischer vor bzw. stromaufwärts der Reduktionsmittelzufuhr angeordnet, so hat das zur Folge, dass das zur Reduktionsmittelzufuhr geführte Abgas bereits schon verwirbelt wird. Beim Einleiten des Reduktionsmittels (fest, flüssig und/oder gasförmig) erfolgt dann sofort dessen Verwirbelung und eine sehr gute Durchmischung mit dem Abgas. Im anderen Fall ist der Mischer dem Filterelement nachgeschaltet, wobei dieser infolge der Vormischung durch das Filterelement deutlich kürzer und/oder kleinvolumiger ausgeführt sein kann. Die letzte Alternative ist beispielsweise mit Rücksicht auf den im SCR-Katalysator eingesetzten katalytisch aktiven Wirkstoff von Vorteil. Dennoch wird in der Summe von Filterelement und dem verkürzten Mischer ein deutlich geringer Druckverlust registriert.

Weiter wird vorgeschlagen, dass der mindestens eine Mischer aus einem hochtemperaturfesten Material und unbeschichtet ist. Als hochtemperaturfestes Material kommen beispielsweise chrom- und/oder aluminumhaltige Stahlfolien in Betracht. Aufgrund der Tatsache, dass dieses Material nicht beschichtet ist, erfüllt der Mischer primär eine einzige Hauptfunktion, nämlich das Mischen von Reduktionsmittel mit dem Abgas, und ist relativ preiswert herstellbar.

Alternativ dazu wird auch vorgeschlagen, dass der mindestens eine Mischer aus einem hochtemperaturfesten Material ist und eine die Hydrolyse fördernde Beschichtung aufweist. Um die Verdampfung/Hydrolyse ausreichend zu beschleunigen und die Bildung unerwünschter Nebenprodukte zu vermeiden, werden sämtliche mit dem Harnstoff in Berührung kommenden Bauteile, insbesondere die Kanalwände des Mischers, mit feinteiligen anorganischen Oxiden beschichtet. Die anorganischen Oxide müssen bei Temperaturen von bis zu 900° C gegenüber dem Abgas resistent sein und ihre Porenstruktur muss über mehrere tausend Betriebsstunden stabil bleiben. Es werden deshalb Abmischungen von Aluminumoxid mit Titandioxid, Siliciumdioxid, Zirkoniumdioxid und/oder H-Zeolithen bevorzugt eingesetzt.

Alternativ dazu wird vorgeschlagen, dass der mindestens eine Mischer aus dem temperaturfesten Material eine für die selektive katalytische Reaktion geeignete Beschichtung aufweist. Ganz besonders bevorzugt weist der Mischer eine katalytisch aktive Beschichtung auf, welche sowohl die Hydrolyse als auch die selektive katalytische Reaktion fördert. Hierzu wird insbesondere die Verwendung von Metalloxidabmischungen mit H-Zeolith vorgeschlagen, woraus der Vorteil resultiert, dass der nachgeschaltete SCR-Katalysator um 10 bis 30 % hinsichtlich seines Volumens bzw. seiner katalytisch aktiven Oberfläche reduziert werden kann.

Gemäß einer weiteren Ausgestaltung der Erfindung hat der mindestens eine Mischer zumindest teilweise strukturierte Blechlagen, die so angeordnet sind, dass für ein Abgas offen durchströmbare Kanäle gebildet werden. Bei der Gestaltung eines "offenen" Mischers sind grundsätzlich die gleichen Kriterien anzulegen, wie sie bereits oben im Hinblick auf das Filterelement beschrieben wurden. Insoweit wird auf diese Erläuterung Bezug genommen.

Der katalytische Konverter kann auch mindestens eine konusfömrige Wabenstruktur umfassen. Ein solcher Konverter, der mit einem SCR-Katalysator versehen ist, benötigt in der Regel eine relativ große Oberfläche zur nahezu vollständigen Umsetzung der Stickoxide. Aus diesem Grund ist es besonders wichtig, den katalytischen Konverter platzsparend im motornahen Bereich bzw. im Unterboden eines Pkws anzuordnen. Die Verwendung konusartiger Wabenstrukturen ermöglicht beispielsweise die Ausnutzung der Einführstutzen bzw. Ausführstutzen von Abgasleitungen, so dass diese Teile der Abgasleitung ebenfalls zur katalytischen Reaktion ausgenutzt werden.

Weitere Einzelheiten und Vorteile der erfindungsgemäßen Abgasanlage sowie des technischen Umfelds werden anhand der Zeichnungen näher erläutert. Dabei sei darauf hingewiesen, dass die gezeigten Ausführungsbeispiele besonders bevorzugte Ausgestaltungen der Erfindungen sind, die Erfindung jedoch nicht auf sie begrenzt ist.

Es zeigen:
- Fig. 1: schematisch und perspektivisch den Aufbau einer Abgasanlage,
- Fig. 2: eine Baueinheit aus Katalysatorträger und Heizelement,
- Fig. 3: schematisch einen Wabenkörper eines Mischers, und
- Fig. 4: eine Detailansicht eines Filterelementes.

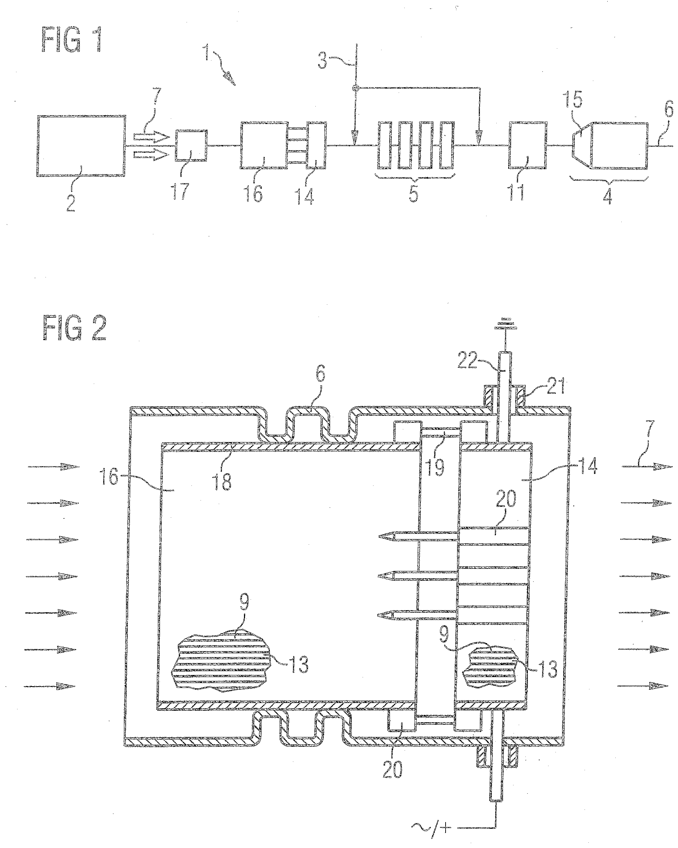

Figur 1 zeigt schematisch eine Abgasanlage 1 zur Umsetzung von Schadstoffen eines Abgases einer mobilen Verbrennungskraftmaschine 2. Die dargestellte Ausführungsform zeigt mehrere spezielle Ausgestaltungen der zur Umsetzung eingesetzten Komponenten, wobei die oben genannten Vorteile auch einzeln verwirklicht sein können. In Strömungsrichtung 7 des Abgases folgt der Verbrennungskraftmaschine 2 zunächst ein Vorkatalysator 17, der bevorzugt relativ nahe dem Motor nachgeschaltet ist. Der Vorkatalysator 17 erfüllt insbesondere die Funktion, in der Kaltstartphase bereits mit der Umsetzung von Schadstoffen zu starten. Dies ist ihm deshalb möglich, da das von der Verbrennungskraftmaschine 2 emittierte Abgas relativ heiß ist.

Dem Vorkatalysator 17 nachgeschaltet ist eine Baueinheit aus einem Katalysatorträger 16 und einem Heizelement 14. Diese Baueinheit wird anschließend mit Bezug auf Figur 2 näher erläutert.

Stromabwärts des Heizelementes 14 und vor, d. h. stromaufwärts eines Filterelementes 5 wird mit Hilfe einer Reduktionsmittelzufuhr 3 das zur Reduktion von Stickoxiden eingesetzte Reduktionsmittel, insbesondere fester Harnstoff, in die Abgasleitung 6 eingeleitet. Das Filterelement 5 ist hier durch eine Mehrzahl scheibenförmiger, insbesondere metallischer, Wabenkörper dargestellt. In dem dargestellten Ausführungsbeispiel ist nicht nur stromaufwärts des Filterelements 5 eine Reduktionsmittelzufuhr 3 vorgesehen, vielmehr wird zusätzlich stromabwärts des Filterelementes 5 (beispielsweise flüssiges und/oder gasförmiges) Reduktionsmittel zugeführt. Das mit dem Reduktionsmittel versehene Abgas trifft anschließend auf einen Mischer 11, der eine abschließende Feinverteilung der Reduktionsmitteltröpfchen bzw. -partikel im Abgas bewirkt. Das so vorbereitete Abgas trifft nun auf einen katalytischen Konverter 4, der hier auf der Abgaseintrittseite eine konusförmige Wabenstruktur 15 aufweist. Die Schadstoffe im Abgas werden mit Hilfe des katalytischen Konverters 4 umgesetzt. Das gilt in besonderem Maße für Stickoxide, die im Wege des SCR-Verfahrens umgesetzt werden.

Figur 2 zeigt schematisch und in einem Schnitt eine Baueinheit aus Katalysatorträger 16 und Heizelement 14. Die Anordnung dieser Komponenten ist dabei so gewählt, dass das Heizelement 14 in Strömungsrichtung 7 des Abgases gesehen dem Katalysatorträger 16 nachgeschaltet ist. Der Katalysatorträger 16 umfasst ein Mantelrohr 18, in dessen Inneren eine Vielzahl von Blechlagen 9 angeordnet sind, die so strukturiert und/oder miteinander gewunden sind, dass für ein Abgas durchströmbare Kanäle 13 gebildet sind.

An der stromabwärts gelegenen Stirnseite des Katalysatorträgers 16 ist das Heizelement 14 befestigt. Hierzu dienen Stifte 19, die außerhalb am Mantelrohr 18 des Katalysatorträgers 16 angebracht sind, oder sich in innere Bereiche hineinerstrecken. Aufgrund der Tatsache, dass das Heizelement 14 elektrisch beheizt wird, sind die Stifte 19 mit einer Isolierung 20 versehen, die einen elektrischen Kontakt hin zum Katalysatorträger 16 unterbinden. Das dargestellte Heizelement 16 weist ebenfalls eine Vielzahl von Blechlagen 9 auf, die für das Abgas durchströmbare Kanäle 13 bilden, die bevorzugt parallel zur Strömungsrichtung 7 des Abgases angeordnet sind. Zur Stromzufuhr weist die Abgasleitung 6 Anschlüsse 21 auf, durch welche sich elektrisch isoliert Elektroden 22 hindurcherstrecken. Über die Elektroden 22 ist das Heizelement 12 mit Gleichstrom oder Wechselstrom zu versorgen.

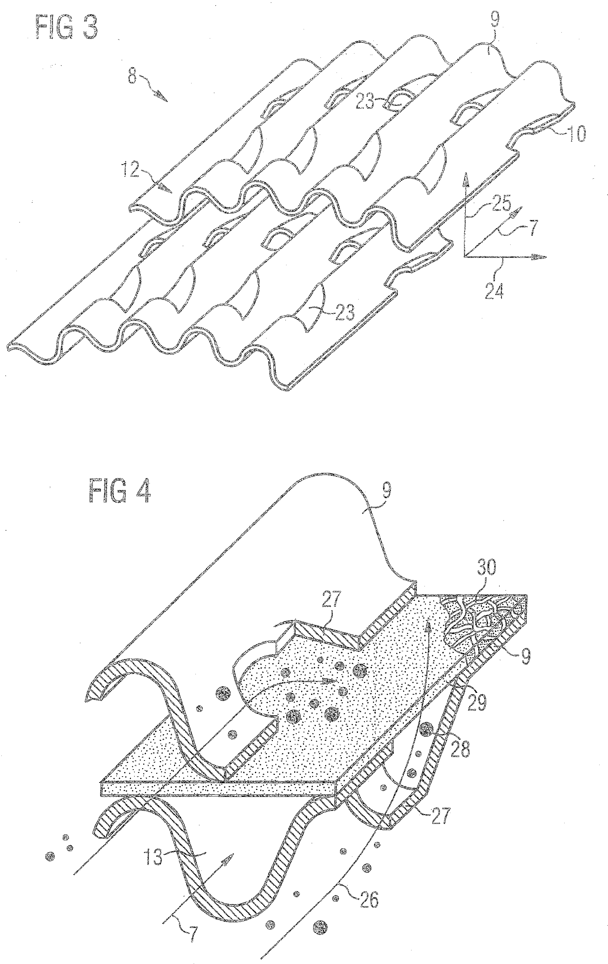

Figur 3 zeigt ausschnittsweise Blechlagen 9, die Mikrostrukturen 10 aufweisen, und einen Wabenkörper 8 bilden. Derartige Ausgestaltungen von Blechlagen 9 bzw. Wabenstrukturen 8 sind insbesondere als Mischer 11 einzusetzen. Die Mikrostrukturen 10 umfassen beispielsweise eine Mehrzahl von Öffnungen 23 und Leitflächen 27, die einen intensive Vermengung bzw. Vermischung von Reduktionsmittel und dem Abgas gewährleisten. Dabei weisen die Blechlagen 9 eine Beschichtung 12 auf, die je nach Einsatzzweck des Mischers 11 bzw. dessen Position im Abgassystem unterschiedlich gewählt werden kann. Die Mikrostrukturen 10 sind so angeordnet, dass eine Ablenkung des Abgases bzw. des Reduktionsmittels, welches bevorzugt in Strömungsrichtung 7 strömt, auch in Querrichtung 24 und/oder Radialrichtung 25 abgelenkt wird.

Figur 4 zeigt im Detail ein Filterelement 5. Dieses umfasst wiederum eine Mehrzahl zumindest teilweise strukturierter Blechlagen 9, die für das Abgas durchströmbare Kanäle 13 bilden. Das Abgas weist eine Vielzahl von Partikeln 28 auf, die im wesentlichen parallel zur Strömungsrichtung 7 des Abgases einer Flugbahn 26 folgen. Durch die Mikrostrukturen 10 bzw. Leitflächen 27 erfolgt eine Umlenkung der Partikel 28 hin zu einer Zwischenlage 29. Diese Zwischenlage 29 kann auch als blanke metallische Blechlage 9 ausgebildet sein, hier ist jedoch eine Zwischenlage 29 aus Fasern 30 dargestellt. Diese aus Fasern 30 bestehende Zwischenlage 29 weist bevorzugt eine z.B. die selektive katalytische Reaktion fördernde Beschichtung auf. Hat die Zwischenlage eine niedrige Porosität (ca. 50%), so sind die Leitflächen 27 bevorzugt klein auszuführen, damit einerseits ausreichend Ruß bzw. Partikel 28 aus dem Abgasstrom herausgefiltert werden, andererseits aber auch eine relativ unbehinderte Durchströmung des Reduktionsmittel-Abgas-Gemisches durch das Filterelement 3 gewährleistet ist. Auf der anderen Seite ist es aber auch möglich, die Filterlage bzw. die mit Fasern versehene Zwischenlage 29 relativ durchlässig zu gestalten, also mit einer sehr hohen Porosität zu versehen, insbesondere im Bereich von 75 bis 90 %. Das hat zur Folge, dass die feindispersverteilten Reduktionsmittelteilchen durch eine solche Filterlage hindurchtreten können bzw. sich dort gut anlagern können und somit entweder in der beschichteten Zwischenlage 29 selbst oder noch an/in dem stromabwärts gelegenen SCR-Katalysator ihre Wirkung entfalten können.

Die hier vorgeschlagene Abgasanlage zeichnet sich durch besonders hohe Umsatzraten bei relativ geringen Herstellungskosten aus. Insbesondere ist dieses Konzept leicht in bereits vorhandene Abgasanlagen zu integrieren.

## Patentansprüche

1. Abgasanlage (1) zur Umsetzung von Schadstoffen eines Abgases einer mobilen Verbrennungskraftmaschine (2), umfassend zumindest eine Reduktionsmittelzufuhr (3), einen katalytischen Konverter (4), ein Filterelement (5) und eine Abgasleitung (6), wobei die Reduktionsmittelzufuhr (3) vor dem Filterelement (5) in die Abgasleitung (6) mündet und der katalytische Konverter (4) dem Filterelement (5) in Strömungsrichtung (7) des Abgases nachgeschaltet ist, wobei das Filterelement (5) eine katalytische Beschichtung (12) eines SCR-Katalysators aufweist und das Filterelement (5) ein metallischer Wabenkörper (8) mit zumindest teilweise strukturierten Blechlagen (9) ist, wobei die Blechlagen (9) zumindest teilweise Mikrostrukturen (10) aufweisen.

2. Abgasanlage (1) nach Patentanspruch 1, wobei stromaufwärts der Reduktionsmittelzufuhr (3) ein die Oxidation des Abgases fördernder Katalysatorträger (16) angeordnet ist, dem bevorzugt ein Heizelement (14) nachgeschaltet ist, das vorzugsweise mit dem Katalysatorträger (16) eine Baueinheit bildet.

3. Abgasanlage (1) nach einem der vorhergehenden Patentansprüche, wobei das Filterelement (5) Strukturen in Strömungskanälen (13) aufweist, welche Verwirbelungs-, Beruhigungs- und/oder Totzonen erzeugen und die so gestaltet sind, dass das Filterelement (5) offen ist, so dass es von Kugeln vollständig durchlaufen werden kann, deren Durchmesser größer oder gleich 0,1 mm ist, insbesondere größer als 0,2 mm.

4. Abgasanlage (1) nach einem der vorhergehenden Patentansprüche, wobei das Filterelement (5) offen ist, so dass es von Kugeln vollständig durchlaufen werden kann, deren Durchmesser größer oder gleich 0,1 mm ist, vorzugsweise größer als 0,2 mm, und Mikrostrukturen (10) aufweist, die weniger als 60 % des Kanalquerschnittes bedecken.

5. Abgasanlage (1) nach einem der vorhergehenden Patentansprüche, wobei das Filterelement (5) zumindest eine Zwischenlage (29) aufweist, die bevorzugt aus Fasern (30) gebildet ist und die zwischen zwei Blechlagen (9) angeordnet ist, die so ausgebildet und mit Leitflächen (27) versehen sind, dass eine Umlenkung von im Abgas enthaltenen Partikeln (28) hin zu der Zwischenlage (29) erfolgt, wobei die Zwischenlage (29) insbesondere eine Porosität von 50 % aufweist, bevorzugt eine Porosität im Bereich von 75 % bis 90 %.

6. Abgasanlage (1) nach einem der vorhergehenden Patentansprüche, wobei in Strömungsrichtung (7) des Abgases stromaufwärts und/oder stromabwärts des Filterelements (5) mindestens ein Mischer (11) angeordnet ist, wobei der Mischer (11) bevorzugt stromabwärts der Reduktionsmittelzufuhr (3) positioniert ist.

7. Abgasanlage (1) nach Patentanspruch 6, wobei der mindestens eine Mischer (11) aus einem hochtemperaturfesten Material ist und eine die Hydrolyse fördernde Beschichtung (12) aufweist.

8. Abgasanlage (1) nach Patentanspruch 6 oder 7, wobei der Mischer (11) an allen mit Harnstoff als Reduktionsmittel in Berührung kommenden Bereichen mit feinteiligen anorganischen Oxiden beschichtet ist, die bei Temperaturen von bis zu 900° C gegenüber dem Abgas resistent sind und deren Porenstruktur über mehrere tausend Betriebsstunden stabil bleibt.

9. Abgasanlage (1) nach einem der Patentansprüche 8, wobei die anorganischen Oxide Abmischungen von Aluminiumoxid und Titandioxid, Siliciumdioxid, Zirconiumdioxid und/oder H-Zeolith aufweisen.

10. Abgasanlage (1) nach einem der Patentansprüche 7 bis 10, wobei der Mischer (11) offen ausgeführt ist, so dass er von Kugeln vollständig durchlaufen werden kann, deren Durchmesser größer oder gleich 0,1 mm ist, insbesondere größer als 0,2 mm.

## Claims

1. Exhaust system (1) for converting pollutants of an exhaust gas of a mobile internal combustion engine (2), comprising at least one reducing agent feed (3), a catalytic converter (4), a filter element (5) and an exhaust line (6), wherein the reducing agent feed (3) opens into the exhaust line (6) upstream of the filter element (5) and the catalytic converter (4) is positioned downstream of the filter element (5) in the flow direction (7) of the exhaust gas, wherein the filter element (5) has a catalytic coating (12) of an SCR catalyst, and wherein the filter element (5) is a metallic honeycomb body (8) with at least partially structured sheet-metal layers (9), wherein the sheet-metal layers (9) at least partially have microstructures (10).

2. Exhaust system (1) according to Patent Claim 1, wherein a catalyst substrate (16) which promotes the oxidation of the exhaust gas is arranged upstream of the reducing agent feed (3), downstream of which catalyst substrate there is preferably positioned a heating element (14) which preferably forms a structural unit with the catalyst substrate (16).

3. Exhaust system (1) according to one of the preceding patent claims, wherein the filter element (5) has structures in flow ducts (13), which structures generate turbulence, calming and/or dead zones and are designed such that the filter element (5) is open such that it can be passed through completely by spheres with a diameter greater than or equal to 0.1 mm, in particular greater than 0.2 mm.

4. Exhaust system (1) according to one of the preceding patent claims, wherein the filter element (5) is open such that it can be passed through completely by spheres with a diameter greater than or equal to 0.1 mm, preferably greater than 0.2 mm, and has microstructures (10) which cover less than 60% of the duct cross section.

5. Exhaust system (1) according to one of the preceding patent claims, wherein the filter element (5) has at least one intermediate layer (29) which is preferably formed from fibres (30) and which is arranged between two sheet-metal layers (9) which are designed, and equipped with guide surfaces (27), such that particles (28) contained in the exhaust gas are diverted toward the intermediate layer (29), wherein the intermediate layer (29) has in particular a porosity of 50%, preferably a porosity in the range from 75% to 90%.

6. Exhaust system (1) according to one of the preceding patent claims, wherein at least one mixer (11) is arranged upstream and/or downstream of the filter element (5) in the flow direction (7) of the exhaust gas, wherein the mixer (11) is preferably positioned downstream of the reducing agent feed (3).

7. Exhaust system (1) according to Patent Claim 6, wherein the at least one mixer (11) is composed of a high-temperature-resistant material and has a coating (12) which promotes hydrolysis.

8. Exhaust system (1) according to Patent Claim 6 or 7, wherein the mixer (11) is coated with fine-particle inorganic oxides on all regions which come into contact with urea as reducing agent, which oxides are resistant to the exhaust gas at temperatures of up to 900°C and the pore structure of which oxides remains stable over several thousand operating hours.

9. Exhaust system (1) according to one of Patent Claims 8, wherein the inorganic oxides have mixtures of aluminium oxide and titanium dioxide, silicon dioxide, zirconium dioxide and/or H zeolite.

10. Exhaust system (1) according to one of Patent Claims 7 to 10, wherein the mixer (11) is of open design such that it can be passed through completely by spheres with a diameter greater than or equal to 0.1 mm, in particular greater than 0.2 mm.

## Revendications

1. Installation de gaz d'échappement (1) pour convertir des substances toxiques d'un gaz d'échappement d'un moteur à combustion interne mobile (2), comprenant au moins une alimentation en agent réducteur (3), un convertisseur catalytique (4), un élément de filtre (5) et une conduite de gaz d'échappement (6), l'alimentation en agent réducteur (3) débouchant avant l'élément de filtre (5) dans la conduite de gaz d'échappement (6) et le convertisseur catalytique (4) étant monté en aval de l'élément de filtre (5) dans le sens d'écoulement (7) du gaz d'échappement, l'élément de filtre (5) présentant un revêtement catalytique (12) d'un catalyseur SCR et l'élément de filtre (5) étant un corps métallique en nid d'abeilles (8) avec des couches de tôle (9) au moins partiellement structurées, les couches de tôle (9) présentant au moins en partie des microstructures (10).

2. Installation de gaz d'échappement (1) selon la revendication 1, dans laquelle, en amont de l'alimentation en agent réducteur (3), est disposé un support de catalyseur (16) supportant l'oxydation du gaz d'échappement, en aval duquel est de préférence monté un élément chauffant (14) qui forme de préférence une unité structurelle avec le support de catalyseur (16) .

3. Installation de gaz d'échappement (1) selon l'une quelconque des revendications précédentes, dans laquelle l'élément de filtre (5) présente des structures dans des canaux d'écoulement (13) qui génèrent des zones de tourbillon, des zones calmes et/ou des zones mortes, et qui sont configurées de telle sorte que l'élément de filtre (5) soit ouvert, de sorte qu'il puisse être complètement parcouru par des billes dont le diamètre est supérieur ou égal à 0,1 mm, en particulier supérieur à 0,2 mm.

4. Installation de gaz d'échappement (1) selon l'une quelconque des revendications précédentes, dans laquelle l'élément de filtre (5) est ouvert de manière à pouvoir être parcouru complètement par des billes dont le diamètre est supérieur ou égal à 0,1 mm, de préférence supérieur à 0,2 mm, et présente des microstructures (10) qui couvrent moins de 60 % de la section transversale du canal.

5. Installation de gaz d'échappement (1) selon l'une quelconque des revendications précédentes, dans laquelle l'élément de filtre (5) présente au moins une couche intermédiaire (29) qui est de préférence formée de fibres (30) et qui est disposée entre deux couches de tôle (9) qui sont réalisées, et pourvues de surfaces de guidage (27), de telle sorte qu'il se produise une déviation de particules (28) contenues dans le gaz d'échappement vers la couche intermédiaire (29), la couche intermédiaire (29) présentant notamment une porosité de 50 %, de préférence une porosité dans une plage de 75 % à 90 %.

6. Installation de gaz d'échappement (1) selon l'une quelconque des revendications précédentes, dans laquelle, dans le sens d'écoulement (7) du gaz d'échappement en amont et/ou en aval de l'élément de filtre (5), est disposé au moins un mélangeur (11), le mélangeur (11) étant de préférence positionné en aval de l'alimentation en agent réducteur (3).

7. Installation de gaz d'échappement (1) selon la revendication 6, dans laquelle l'au moins un mélangeur (11) est constitué d'un matériau résistant aux hautes températures et présente un revêtement (12) favorisant l'hydrolyse.

8. Installation de gaz d'échappement (1) selon la revendication 6 ou 7, dans laquelle le mélangeur (11), au niveau de toutes les régions venant en contact avec de l'urée en tant qu'agent réducteur, est revêtu d'oxydes inorganiques finement divisés qui sont résistants aux gaz d'échappement à des températures allant jusqu'à 900° C et dont la structure poreuse reste stable pendant plusieurs milliers d'heures de fonctionnement.

9. Installation de gaz d'échappement (1) selon l'une des revendications 8, dans laquelle les oxydes inorganiques présentent des mélanges d'oxyde d'aluminium et de dioxyde de titane, de dioxyde de silicium, de dioxyde de zirconium et/ou de zéolithes H.

10. Installation de gaz d'échappement (1) selon l'une quelconque des revendications 7 à 10, dans laquelle le mélangeur (11) est réalisé sous forme ouverte de telle sorte qu'il puisse être parcouru complètement par des billes dont le diamètre est supérieur ou égal à 0,1 mm, en particulier supérieur à 0,2 mm.
